Europäisches Patentamt

European Patent Office

Office européen des brevets

(11) Veröffentlichungsnummer: **0 057 379**
**A1**

(12) **EUROPÄISCHE PATENTANMELDUNG**

(21) Anmeldenummer: **82100399.3**

(22) Anmeldetag: **21.01.82**

(51) Int. Cl.³: **C 03 B 9/02,** C 03 B 9/08

(30) Priorität: **30.01.81 DE 3103091**

(43) Veröffentlichungstag der Anmeldung: **11.08.82**
**Patentblatt 82/32**

(84) Benannte Vertragsstaaten: **AT BE FR GB IT SE**

(71) Anmelder: **Maschinenfabrik Reinhausen Gebrüder Scheubeck GmbH & Co. KG., Falkensteinstrasse 8, D-8400 Regensburg (DE)**

(72) Erfinder: **Fend, Fritz M., Thurmayerstrasse 11, D-8400 Regensburg (DE)**
Erfinder: **Koschorz, Reinhard, Hauzensteiner Strasse 106, D-8413 Regenstauf (DE)**

(54) **Vorrichtung zum Blasen eines Külbels mittels einer Pfeife.**

(57) Die Pfeife (6) ist auf ein maschinell angetriebenes, eine Rotation der Pfeife (6) bewirkendes Rollensystem (23) auflegbar. Das Rollensystem (23) ist Bestandteil eines Gestells (1). An dem Gestell (1) sitzt ein mit einer steuerbaren Druckluftquelle verbundenes Kupplungsstück (4), in welches die Pfeife mit ihrem Mundstück einrastbar ist. Zum besseren Anformen des Külbels ist an dem Gestell (9) ein Hebel (7) angelenkt, der mit einem Wulgerstück (8) versehen ist. Das Wulgerstück (8) besitzt eine muldenförmige Ausnehmung (81), mit welcher es zum Anformen des Külbels an das Külbel herangeführt wird.

0057379

Maschinenfabrik Reinhausen     Regensburg, den 29.1.81
Gebrüder Scheubeck GmbH & Co KG     261Ma/Gl

- 1 -

## Vorrichtung zum Blasen eines Külbels mittels einer Pfeife

Die Erfindung bezieht sich auf eine Vorrichtung zum Blasen eines Külbels mittels einer Pfeife gemäß Oberbegriff des Patentanspruches 1. Derartige Vorrichtungen sind bekant: DE-OS 28 29 988. Sie bieten eine wesentliche Vereinfachung und auch eine erhebliche Qualitätsverbesserung bei der Herstellung mundgeblasener Glaskörper.

Aufgabe der Erfindung ist es, eine weitere Ausgestaltung der bekannten Vorrichtung zur weiteren Arbeitserleichterung und zur weiteren Verbesserung der Qualität des erzeugten Külbels anzugeben. Diese Aufgabe wird bei der eingangs genannten Vorrichtung erfindungsgemäß durch die im Kennzeichen des Anspruches 1 angegebenen Mittel gelöst.

Der mit der Erfindung erzielte Vorteil liegt in der weiteren Arbeitsvereinfachung beim Külbelmachen und in einer erheblichen Verbesserung der Qualität des mit der Vorrichtung erzeugten Külbels. Da der am Ende der Pfeife sitzende Glasposten beim ersten Anblasen zentrisch im Wulgerstück gehalten wird, ergibt sich beim Ausblasen eine wunschgemäße Wandstärke des Külbels. Dies bedeutet für das Fertigprodukt eine erhebliche Qualitätsverbesserung.

Als besonders zweckmäßig wird angesehen. wenn das Wulgerstück von unten an den am Pfeifenende sitzenden Glasposten herangeführt wird. Es wird hierdurch nicht allein einem Absacken des Glaspostens entgegengewirkt, sondern das Wulgerstück kann hierdurch auch in der Ruhestellung in einem mit Wasser gefüllten Behälter, der ebenfalls am Gestell sitzen kann, eingetaucht werden. Das Wasser dient einerseits der Kühlung des Wulgerstückes und erleichtert andererseits den Wulgervorgang, da beim Aufwärtsschwenken des Wulgerstückes jeweils eine Restmenge Wasser in der muldenförmigen Ausnehmung des Wulgerstückes verbleibt. Eventuell kann es zweckmäßig sein, mittels einer Bohrung im Wulgerstück den Abfluß des Wassers aus der muldenförmigen Ausnehmung zu ermöglichen, damit beim Aufwärtsschwenken des Wulgerstückes nicht zuviel Wasser in der Mulde verbleibt.

Da es beim Anformen des Külbels sehr darauf ankommt, dieses möglichst gleichmäßig und exakt am Ende der Pfeife zu erzeugen, wird in Weiterbildung der Erfindung das Wulgerstück seitlich von einem Rahmen, der am Ende des Hebels vorgesehen ist, umfaßt, so daß das Wulgerstück innerhalb dieses Rahmens, z.B. mittels Stellschrauben, für die Lage und Größe des Külbels justiert werden kann. Es läßt sich dann ein exaktes Anformen des Külbels am Pfeifenende erzielen. Wird ein größerer Einstellbereich für das Wulgerstück z.B. beim Einsatz unterschiedlich langer Pfeifen gewünscht, so kann der das Wulgerstück tragende Hebel parallel zur Längsachse der Pfeife verschiebbar angeordnet werden.

Weiter ist es für die Gestaltung des Külbels von Vorteil, wenn im Bereich des Külbels - bei in die Vorrichtung eingelegter Pfeife - am Gestell eine Markierung, z.B. eine

0057379

- 3 -

Skala angebracht wird, die das Abschätzen der Größe des Külbels erleichtert.

Eine weitere Arbeitsvereinfachung beim Anformen des Külbels läßt sich in Fortführung der Erfindung erreichen, wenn an einem weiteren am Gestell angebrachten Hebel ein Vorstreichwerkzeug vorgesehen wird, welches zum Erzeugen einer Sollbruchstelle an den Hals des Külbels herangeführt werden kann, um dort eine Einkerbung zu erzeugen. Dieses Vorstreichwerkzeug kann auch als Gabel ausgebildet werden, die dann durch Linearbewegung so an den Hals des Külbels herangeführt wird, daß die Einkerbung für die Sollbruchstelle von zwei Seiten erfolgen kann. Um ein eventuell geringfügiges Schlagen der rotierenden Pfeife ausgleichen zu können, ist es dabei zweckmäßig, die Gabel am sie tragenden Hebel gelenkig anzuordnen, damit sie der schlagenden Bewegung der Pfeife gut folgen kann. Ein weiterer Vorteil ergibt sich auch dann, wenn die beiden Hebelarme je für sich gelenkig gelagert sind, also gespreizt werden können. Ferner kann es vorteilhaft sein, zum Erzeugen der Einkerbung für die Sollbruchstelle an jedem Hebelende eine Rolle vorzusehen, deren Umfang als Schneide ausgebildet ist und die bei Rotation der Pfeife am Külbelhals abrollen und dabei die Einkerbung erzeugen. Auch hierbei ist es wieder zweckmäßig, das Vorstreichwerkzeug parallel zur Achse der Pfeife verschiebbar anzuordnen, damit es an unterschiedliche Pfeifenlängen angepaßt werden kann.

Ein Ausführungsbeispiel der Erfindung ist in der Zeichnung schematisch dargestellt und wird nachstehend näher beschrieben. Es zeigen

0057379

- 4 -

Figur 1 eine Vorderansicht der Vorrichtung
zum Blasen eines Külbels,
Figur 2 eine Seitenansicht,
Figur 3 die Halterung des Wulgerstückes im
Detail und
Figur 4 ein Vorstreichwerkzeug ebenfalls im
Detail.

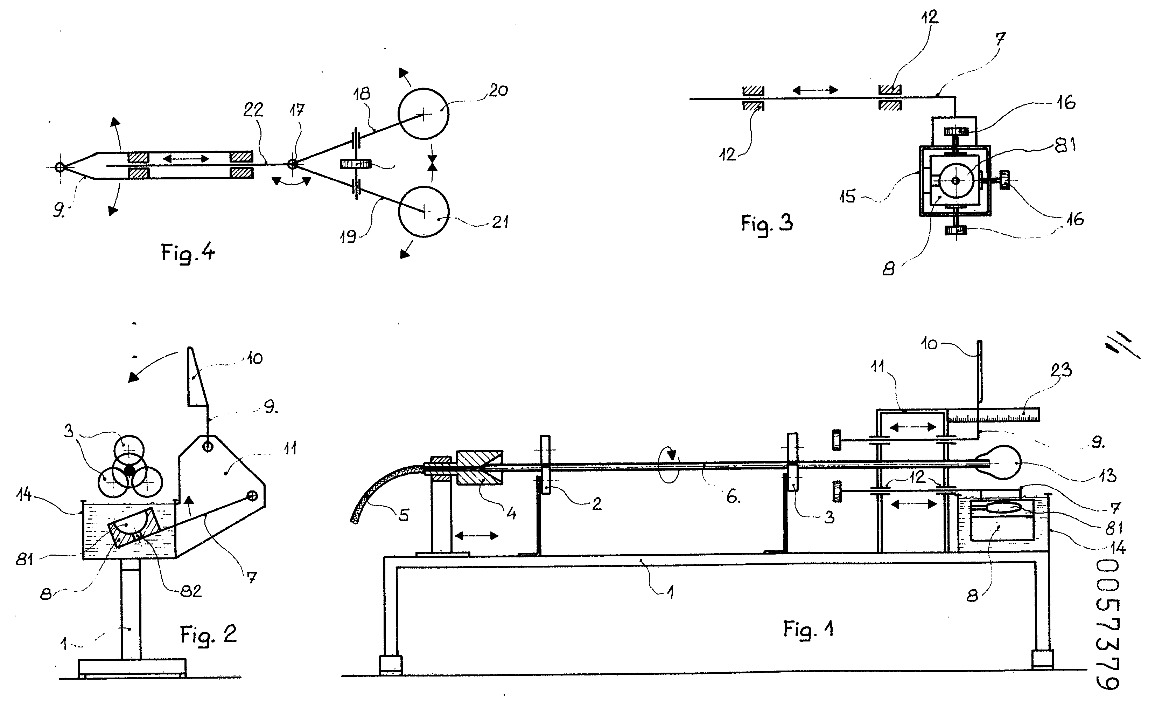

Wie aus Figur 1 und 2 ersichtlich, besteht die Vorrichtung im wesentlichen aus einem Gestell 1, einem darauf montierten Rollensystem 2, 3, einem Kupplungsstück 4, welches mittels eines Schlauches 5 an eine nicht dargestellte steuerbare Druckluftquelle angeschlossen ist, einer Glasbläserpfeife 6, die mit ihrem Mundstück im Kupplungsstück sitzt, aus einem am Gestell 1 angelenkten Hebel 7, der ein Wulgerstück 8 trägt sowie aus einem ebenfalls am Gestell 1 angelenkten weiteren Hebel 9, der ein Vorstreichwerkzeug 10 trägt. Der das Wulgerstück 8 tragende Hebel 7 ist in einem mit dem Gestell 1 verbundenen Rahmen 11 gelagert. Er ist in Achsrichtung der Glasbläserpfeife 6 verschiebbar, so daß das an seinem Ende sitzende Wulgerstück 8 leicht auf die jeweilige Länge der Glasbläserpfeife 6 eingestellt werden kann. Der Hebel ist mittels der im Rahmen 11 sitzenden Lager 12 schwenkbar, so daß das Wulgerstück 8 mit seiner muldenförmigen Ausnehmung 81 von unten an das Külbel 13, welches am Ende der Glasbläserpfeife 6 sitzt, herangeführt werden kann. In der Ruhestellung befindet sich das Ende des Hebels 7 mit dem daran befestigten Wulgerstück 8 in einer kleinen mit Wasser gefüllten Wanne 14, die ebenfalls am Gestell 1 befestigt ist. Damit beim Hochschwenken des Wulgerstückes 8 nicht zuviel Wasser in der Ausnehmung 81 verbleibt, ist im Wulgerstück

- 5 -

noch eine Abflußbohrung 82 vorgesehen. Um das Wulgerstück möglichst exakt auf die gewünschte Größe und
Form des Külbels einstellen zu können, ist das Wulgerstück innerhalb eines Rahmens 15, der am Ende
des Hebels 7 sitzt, mittels dreier Stellschrauben 16
gehalten. Diese Stellschrauben 16 erlauben eine
Feineinstellung des Wulgerstückes 8 in Bezug auf
das herzustellende Külbel 13. Unabhängig von dieser
Feineinstellung ist - wie bereits erwähnt - eine
Grobeinstellung in Achsrichtung der Pfeife 6 möglich,
indem der Hebel 7 innerhalb der beiden Lager 12 verschoben werden kann.

Der das Vorstreichwerkzeug tragende Hebel 9 ist ähnlich wie der Hebel 7 im Rahmen 11 gelagert und somit
ebenfalls in Achsrichtung der Pfeife 6 verstellbar.
Durch einfaches Herabschwenken dieses Hebels 9 wird
das Vorstreichwerkzeug 10 an den Hals des Külbels 13
der rotierenden Glasbläserpfeife 6 geführt, so daß
auf diese Art eine umlaufende Einkerbung in der Glasmasse erzielt wird, die dem späteren Lösen des Glases
von der Glasbläserpfeife dient.

Da diese Einkerbung in der Glasmasse sehr wichtig
für die Güte der Bruchstelle beim Lösen des Glaskörpers
von der Glasbläserpfeife ist, wird in Figur 4 noch
eine besondere Form des Vorstreichwerkzeuges angegeben.
Der Hebel 9 trägt hierbei zwei über ein Gelenk 17
mit ihm verbundene Einzelhebel 18, 19, die spreizbar
sind und die je eine Schneiderolle 20, 21 tragen. Das
Werkzeug wird, nachdem es in seine Bereitschaftsstellung geschwenkt worden ist, durch Linearbewegung
an den Hals des Külbels 13 herangeführt, so daß die
Einkerbung am Külbel 13 von zwei Seiten erfolgt. Die
Linearbewegung kann durch teleskopartiges Ineinanderschieben des eigentlichen Hebels 9 mit dem das Gelenk 17 tragenden Teil 22 erfolgen. Das Gelenk 17 ermöglicht beim Heranführen des Werkzeuges an den Hals des Külbels, daß sich das Werkzeug einer eventuellen geringfügigen exzentrischen Rotation des Endes der Glasbläserpfeife 6 anpassen kann.

Damit der die Vorrichtung bedienende Glasbläser besser die Größe des Külbels 13 abschätzen kann, ist am Rahmen 11 noch eine Skala 23 angebracht, die sich zweckmäßig in Blickrichtung des Glasbläsers hinter dem Külbel 13 befindet.

Zur Funktion der Vorrichtung sei noch auf folgendes hingewiesen: Der Glasbläser entnimmt mit seiner Pfeife einen Posten Glasmasse aus der Glasschmelze, der am Ende der Pfeife haften bleibt. Dann wird die Pfeife 6 in das Rollensystem 2, 3 der Vorrichtung eingelegt und mit dem Kupplungsstück 4 verrastet. Mittels nicht dargestelltem auf das Rollensystem 2, 3 einwirkenden Motorantrieb wird die Pfeife 6 in Rotation versetzt. Über den am Kupplungsstück angeschlossenen Schlauch 5 und einer im einzelnen nicht dargestellten Steuervorrichtung gibt der Glasbläser Druckluft in die Pfeife 6, wobei er beim Aufblasen des Glaspostens zum Külbel 13 gleichzeitig das Wulgerstück 8 durch Verschwenken des Hebels 7 an das Külbel 13 heranführt. Die Druckluft wird solange dosiert eingeblasen bis das Külbel 13 die gewünschte Größe, die an der Skala 23 abgeschätzt werden kann, erreicht hat. Hiernach wird durch Verschwenken des Hebels 9 das Vorstreichwerkzeug an den Hals des Külbels 13 herangeführt, um dort die Einkerbung für die Sollbruchstelle zu erzielen. Das Verschwenken der Hebel 7 und 9 sowie gegebenenfalls das Erzeugen der Linearbewegung für das Vorstreichwerkzeug (vergl. Fig. 4) können selbstverständlich ebenfalls mittels Kraftantrieb oder auch mittels Hydraulik- oder Pneumatiksteuerung bewirkt werden. Nach Erzeugen des Külbels einschließlich der eventuell erforderlichen Abkühlung wird die Pfeife 6 aus der Vorrichtung herausgenommen und zur weiteren Bearbeitung weitergereicht. Die Vorrichtung steht dann für einen neuen Vorgang wieder zur Verfügung.

0057379

- 1 -

Patentansprüche:

1. Vorrichtung zum Blasen eines Külbels mittels einer Pfeife, wobei die Pfeife auf ein maschinell angetriebenes eine Rotation der Pfeife bewirkendes Rollensystem eines Gestells auflegbar ist und mit seinem Mundstück in ein an einer steuerbaren Druck-luftquelle angeschlossenes Kupplungsstück einrast-bar ist,
gekennzeichnet,
durch ein mittels eines am Gestell (1, 11) angelenkten Hebels (7) an das Külbel (13) heranführbares Wulgerstück (8), das mit einer muldenförmigen Ausnehmung (81) zum Anformen des Külbels (13) versehen ist.

2. Vorrichtung nach Anspruch 1,
dadurch gekennzeichnet,
daß das Wulgerstück (8) von unten an das Külbel (13) heranführbar ist und in seiner Grundstellung in einen mit Wasser gefüllten am Gestell (1) sitzenden Behälter (14) eintaucht.

3. Vorrichtung nach Anspruch 1 oder 2,
dadurch gekennzeichnet,
daß das das Wulgerstück (8) haltende Hebelende (7) als Rahmen (15) ausgebildet ist, der das Wulgerstück seitlich umfaßt, wobei das Wulgerstück innerhalb des Rahmens mittels Stellschrauben (16) justierbar ist.

4. Vorrichtung nach einem der vorhergehenden Ansprüche,
dadurch gekennzeichnet,
daß das Wulgerstück (8) am Boden der muldenförmigen Ausnehmung (81) ein Abflußbohrung (82) besitzt.

- 2 -

5. Vorrichtung nach einem der vorhergehenden Ansprüche,
gekennzeichnet,
durch eine im Bereich des Külbels (13) am Gestell (1,11)
angeordnete Markierung (23).

6. Vorrichtung nach einem der vorhergehenden Ansprüche,
gekennzeichnet,
durch ein an den Hals des Külbels (13) herumführbares Vorstreichwerkzeug (10, 18, 19, 20, 21)
zum Anformen einer Sollbruchstelle. welches ebenfalls von einem am Gestell (1, 11) angelenkten
Hebel (9) gehalten wird.

0057379

Fig. 1

Fig. 2

Fig. 3

Fig. 4

Europäisches
Patentamt

**EUROPÄISCHER RECHERCHENBERICHT**

0057379

Nummer der Anmeldung

EP 82 10 0399.3

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | FR - A - 713 217 (G. DURAND & CIE)  <br> * Anspruch; Seite 2, Zeilen 15 bis 19; Fig. 1 bis 3 *  <br> -- | 1-3 | C 03 B 9/02 <br> C 03 B 9/08 |
| A | AT - B - 9 426 (H. SEVERIN)  <br> * Seite 2, Zeilen 8 bis 15; Fig. 2 *  <br> -- | 1,2 | |
| A | US - A - 3 607 204 (D.F. GILBERTSON)  <br> * Spalte 5, Zeilen 12 bis 46; Fig. 1 *  <br> -- | 1 | RECHERCHIERTE SACHGEBIETE (Int. Cl.³) |
| A | EP - A1 - 0 007 997 (MASCHINENFABRIK REINHAUSEN GEBR. SCHEUBECK)  <br> * Ansprüche 10 bis 12; Fig. 1, 4 *  <br> ---- | | C 03 B 9/00 <br> C 03 B 23/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-03-1982 | BERTRAM |

EPA form 1503.1 06.78